(19) 

Europäisches
Patentamt
European
Patent Office
Office européen
des brevets

(11) **EP 2 509 387 B1**

(12) **EUROPEAN PATENT SPECIFICATION**

(45) Date of publication and mention
of the grant of the patent:
**10.05.2017 Bulletin 2017/19**

(21) Application number: **10791381.6**

(22) Date of filing: **24.05.2010**

(51) Int Cl.:
*H04W 84/08* (2009.01)   *H04W 68/02* (2009.01)

(86) International application number:
**PCT/CN2010/073168**

(87) International publication number:
**WO 2010/148875 (29.12.2010 Gazette 2010/52)**

(54) **METHOD, APPARATUS AND SYSTEM FOR TRANSMITTING BROADCAST CHANNEL ASSIGNMENT MESSAGE IN TRUNKING SYSTEM**

VERFAHREN, VORRICHTUNG UND SYSTEM ZUR ÜBERTRAGUNG EINER RUNDFUNKKANALZUWEISUNGSNACHRICHT IN EINEM TRUNKIERUNGSSYSTEM

PROCÉDÉ, APPAREIL ET SYSTÈME DE TRANSMISSION DE MESSAGE D'ATTRIBUTION DE CANAL DE DIFFUSION DANS SYSTÈME À COMMUTATION AUTOMATIQUE DE CANAUX

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **14.12.2009 CN 200910246974**

(43) Date of publication of application:
**10.10.2012 Bulletin 2012/41**

(73) Proprietor: **ZTE Corporation**
**Shenzhen, Guangdong 518057 (CN)**

(72) Inventor: **LIU, Haiwei**
**Shenzhen**
**Guangdong 518057 (CN)**

(74) Representative: **V.O.**
**P.O. Box 87930**
**2508 DH Den Haag (NL)**

(56) References cited:
**WO-A1-2004/006615    WO-A2-2005/079086**
**CN-A- 101 257 658    CN-A- 101 426 175**

Description

## TECHNICAL FIELD

The present disclosure relates to the field of mobile communications and particularly to a method, apparatus and system for transmitting a Broadcast Channel Assignment Message (BCAM) in a trunking system.

## BACKGROUND

In a trunking communication system based on Code Division Multiple Access (CDMA) 2000 mode, a called terminal is typically accessed as follows:

> a base station side sends a paging message to each called terminal, the called terminal returns a paging response to the base station after receiving the paging message and then enters a continuous paging channel monitoring mode; after receiving the paging response, the base station transmits a channel assignment message to the called terminal; after receiving the channel assignment message, the called terminal establishes a corresponding service channel and enters into a communication state. Because each called terminal is required to carry out a signaling handshake with the base station side, the called terminal is accessed at a low speed.

At present, as a channel share technology is used in the conventional group call, each terminal can complete a cluster call using a shared channel, wherein the access of a called terminal is achieved by continuously transmitting a BCAM without resources in a time slot period to make the called terminal monitor a paging channel continuously and by enabling the called terminal to access the conventional group call once the called terminal receives a BCAM with channel resources, without needing a signaling handshake and service negotiation between the called terminal and a base station. For instance, in Chinese Patent Application No.200810065901.3, entitled 'Method for transmitting broadcast channel assignment message in opened trunking architecture system', there is proposed a method for enabling the access of the called by continuously transmitting a BCAM without resources in a time slot period. With this method, although the access speed of a terminal can be increased, the load of a paging channel is increased due to the continuous transmitting of the BCAM without resources in a time slot period, which easily leads to the overload of the paging channel.

WO 2004/006615 discloses a method and a system for multicast service notification in cellular telephone system to enable the cellular telephone systems to provide both multicast and point-to-point services. Several embodiments describe the signaling interaction between an access network and subscriber stations belonging to a multicast group to allow the network to properly notify the subscriber stations of the multicast service. Such a signaling further allows the subscriber stations to recognize the multicast service notification to participate in the multicast service.

## SUMMARY

In view of the problems above, the present disclosure aims to provide a method, apparatus and system for transmitting a broadcast channel assignment message in a trunking system, which can effectively reduce the load of a paging channel, and guarantee the quick access of a called terminal supporting a negative time slot period index while avoiding the call for a called terminal supporting a positive time slot period index being missed.

In order to achieve the purpose above, the present disclosure provides a method for transmitting a Broadcast Channel Assignment Message (BCAM) in a trunking system as defined in claim 1.

In the method, the generating a hash time slot list according to an acquired IMSI list may include:

> the base station side acquires the IMSI list of all members in a conventional group called by a calling terminal according to a group number of the conventional group; and the base station side hashes the IMSI list in a time slot period to generate a hash time slot list.

In the method, the determining a paging time slot monitored by a called terminal according to the hash time slot list may include: calculating a time slot period according to a time slot period index configured by the base station side and acquiring a current paging time slot; performing a modulus calculation on the current paging time slot and the time slot period to obtain a hash time slot of the terminal, and determining whether or not the current paging time slot is monitored by the called terminal according to the hash time slot of the terminal in the following manner: determining there is a called terminal monitoring the current paging time slot and the current paging time slot is the one monitored by the called terminal if the hash time slot of the terminal exists in the hash time slot list, and determining the current paging time slot is not monitored by a called terminal if the hash time slot of the terminal is absent from the hash time slot list.

In the method, the last paging time slot in the time slot period may be calculated according to the following formula: the last paging time slot in a time slot period=the current paging time slot + the time slot period - 1.

In order to achieve the aforementioned method, the present disclosure provides an apparatus for transmitting a BCAM in a trunking system as defined in claim 5.

In the apparatus, the time slot selection unit may include a calculation sub-unit, a modulus calculation sub-unit and a determination sub-unit; wherein the calculation sub-unit is configured to calculate a time slot period according to a time slot period index configured by a base station side, acquire a current paging time slot, and acquire the last paging time slot in the time slot period; the modulus calculation sub-unit is configured to perform a modulus calculation on the current paging time slot and the time slot period to obtain a hash time slot of the terminal; and the determination sub-unit is configured to determine whether or not the current paging time slot is monitored by the called terminal according to the hash time slot of the terminal, and determine, when there is a paging time slot monitored by the called terminal, the paging time slot monitored by the called terminal is the paging time slot monitored by the called terminal.

Accordingly, the present disclosure provides a system for transceiving a BCAM in a trunking system as defined in claim 7.

In the system, the base station side may include a message construction unit, a list acquisition unit, a time slot selection unit, a message placing unit, a first message transmitting unit and a second message transmitting unit; wherein the message construction unit is configured to construct a BCAM without resources and a BCAM with resources; the list acquisition unit is configured to generate a hash time slot list according to an acquired IMSI list; the time slot selection unit is configured to determine a paging time slot monitored by a called terminal according to the hash time slot list and acquire the last paging time slot in a time slot period; the message placing unit is configured to place the BCAM without resources to a queue corresponding to the paging time slot monitored by the called terminal; the first message transmitting unit is configured to transmit the BCAM without resources in the queue to the called terminal, which enters a non-time-slot monitoring mode after demodulating the BCAM without resources; and the second message transmitting unit is configured to transmit the BCAM with resources to the called terminal in the last paging time slot in the time slot period acquired by the time slot selection unit.

In the apparatus, the time slot selection unit may include a calculation sub-unit, a modulus calculation sub-unit and a determination sub-unit; wherein the calculation sub-unit is configured to calculate a time slot period according to a time slot period index configured by the base station side, acquire a current paging time slot, and acquire the last paging time slot in the time slot period; the modulus calculation sub-unit is configured to perform a modulus calculation on the current paging time slot and the time slot period to obtain the hash time slot of the terminal; and the determination sub-unit is configured to determine whether or not the current paging time slot is monitored by the called terminal according to the hash time slot of the terminal, and determine, when there is a paging time slot monitored by the called terminal, the paging time slot is the one monitored by the called terminal.

It can be seen from the technical solution above that, in the method and apparatus for transmitting a BCAM according to the disclosure, upon receiving a BCAM with the channel resource, a called terminal in a non-time-slot monitoring mode can access the current conventional group call quickly, without implementing a signaling handshake or service negotiation with the base station.

Specifically, during the establishment process of a call, the base station side selectively places a BCAM without resources to the paging time slot queue according to the hash time slot list and the paging time slot monitored by the terminal, and transmits the BCAM without resources to an air interface, and the called terminal enters a continuous time slot monitoring mode after demodulating the BCAM without resources; moreover, the base station side transmits the BCAM with resources in the last paging time slot in a time slot period to enable the successful access of all the called terminals in the system group to the current system group call.

In accordance with the present disclosure, a BCAM without resources is selectively transmitted in paging time slots according to the paging time slots monitored by a called terminal, and a BCAM with resources is only transmitted in the last time slot. This is because the called terminal enters a non-time-slot monitoring mode after receiving the BCAM without resources and can join in the current system group call after receiving the BCAM with resources. Therefore, by selectively transmitting BCAMs, the load of a paging channel is greatly reduced, and the utilization rate of the paging channel and the success rate of a paging access are consequentially increased.

In addition, in the present disclosure, a terminal supporting a positive time slot period index and a terminal supporting a negative time slot period index are compatible with each other, and therefore the present disclosure can guarantee the quick access of a called terminal supporting a negative time slot period index while avoiding the call for a called terminal supporting a positive time slot period index being missed. The method and apparatus for transmitting a BCAM in a trunking communication system in the present disclosure are suitable for any communication device needing to send a BCAM.

Therefore, the present disclosure not only solves the problem of the overload of a paging channel caused by the continuous BCAM transmitting, but also increases the utilization rate of the paging channel and the success rate of a paging access.

**BRIEF DESCRIPTION OF THE DRAWINGS**

Fig. 1 is a schematic flowchart illustrating the implementation of a method for transmitting a BCAM in a trunking system according to the disclosure;

Fig. 2 is a schematic flowchart illustrating the implementation of a method for correspondingly placing a BCAM to a paging time slot queue according to the disclosure;

Fig. 3 is a schematic diagram illustrating the components of an apparatus for transmitting a BCAM in a trunking system according to the disclosure;

Fig. 4 is a schematic diagram illustrating the components of a system for transmitting a BCAM in a trunking system according to the disclosure.

**Detailed description**

The basic principle of the present disclosure lies in that: a base station side selectively transmits a BCAM without resources to a called terminal according to a hash time slot list and transmits a BCAM with resources in the last paging time slot in the time slot period, to make all the called terminal in a system group can access a system group call quickly.

It should be noted that the hash time slot list refers to a paging time slot list, which is obtained by hashing an International Mobile Subscriber Identity (IMSI) list according to a time slot period index.

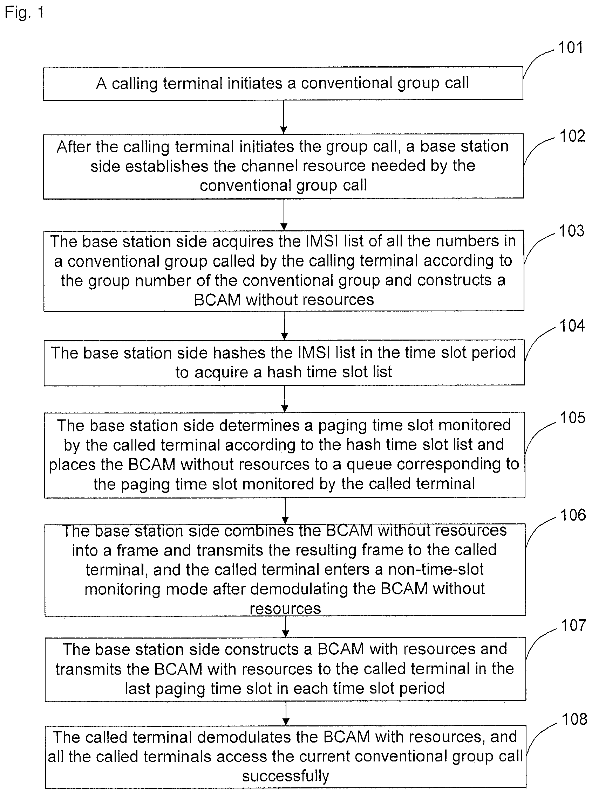

In order to facilitate a better understanding of the foregoing purposes, features and advantages of the present disclosure, the present disclosure is further described below in detail with reference to accompanying drawings and specific embodiments. Referring to Fig. 1, the implementation process of the method for transmitting a BCAM according to the disclosure mainly comprises the following steps.

Step 101: a calling terminal initiates a conventional group call;

in this embodiment, the calling terminal initializes a conventional group call in a Push To Talk (PTT) manner; in the conventional group call, a plurality of terminals share a channel, and all the terminals can use the shared channel to complete a cluster call.

Step 102: after the calling terminal initiates the group call, a base station side establishes the channel resource needed by the conventional group call;

during the establishment process of the call, after the channel resource needed by the conventional group call is successfully established, the base station side carries the corresponding channel resource information such as wireless configuration information and carrier frequency information in a channel assignment message and transmits the channel assignment message to the calling terminal to enable the access of the calling terminal.

Step 103: the base station side acquires the IMSI list of all the members in the conventional group called by the calling terminal according to the group number of the conventional group and constructs a BCAM without resources;

at the base station side, a PTT Dispatching Server (PDS) acquires an IMSI list according to the group number of the conventional group called by the calling terminal, and transmits the IMSI list of all the members in the conventional group to a PTT Base Station System Application Part (PBSSAP); the PBSSAP constructs a BCAM without resources and transmits the IMSI list and the BCAM without resources to a Common Signaling Channel Layer 2 Signaling Process (CSCHP).

Step 104: the base station side hashes the IMSI list in the time slot period to acquire a hash time slot list;

at the base station side, the CSCHP hashes the IMSI list in the time slot period according to a time slot period index to acquire a hash time slot list and transmits the hash time slot list along with the BCAM without resources to a Channel Element Subsystem (CES).

Step 105: the base station side determines the paging time slot monitored by the called terminal according to the hash time slot list and places the BCAM without resources to a queue corresponding to the paging time slot monitored by the called terminal;

at the base station side, in order to enable all the called terminal to receive the BCAM, it is required to calculate the paging time slots monitored by the called terminal according to the IMSI of the called terminal so that the CES can selectively place the BCAM without resources to the paging time slot queue monitored by the called terminal according to the hash time slot list and the paging time slots;

it should be noted that the base station side calculates the time slots monitored by the called terminal in accordance with the requirements listed in the CDMA 2000 protocol, and the specific calculation process can be understood by reference to the CDMA 2000 protocol and is therefore not repeatedly described herein;

here, the step of placing the BCAM without resources to the corresponding paging time slot queue is exemplarily described below:

for a called terminal supporting a positive time slot period index but not a negative time slot period index, when the time slot period index is 0, the time slot period is calculated as follows: $16 \times 2^0 = 16$; assuming the paging time slot of the current paging channel is 24 and the time slots obtained by hashing the IMSI include 0, 2, 4, 6, 8, 10, 12 and 14, then, as the current paging time slot is 24 and the time slot period is 16, the hash time slot of the called terminal is calculated as follows: 24 MOD 16=8; in return, the existence of the hash time slot 8 of the terminal in the hash time slot list indicates that the called terminal monitors the current paging time slot 24, thus, it is required to correspondingly place the BCAM without resources to the queue of the paging time slot 24, wherein MOD represents a modulus calculation; for a paging time slot 25, as 25 MOD 16=9, but the hash time slot 9 of the terminal is absent from the hash time slot list, thus there is no need to place the BCAM without resources to the paging time slot 25; and processes can be implemented for paging time slots 26 to 38 in the same way; wherein the BCAM is placed in Table 1 as follows:

Table 1

| Hash time slot | 8 | | 10 | | 12 | | 14 | | 0 | | 2 | | 4 | | 6 | 7 |
|---|---|---|---|---|---|---|---|---|---|---|---|---|---|---|---|---|
| Paging time slot | 24 | 25 | 26 | 27 | 28 | 29 | 30 | 31 | 32 | 33 | 34 | 35 | 36 | 37 | 38 | 39 |
| Placing or not Placing? | Y | N | Y | N | Y | N | Y | N | Y | N | Y | N | Y | N | Y | Y |

what is listed in the Table 1 above is a method of placing a BCAM to a paging queue for a called terminal supporting a positive time slot period index.

Step 106: the base station side combines the BCAM without resources into a frame and transmits the resulting frame to the called terminal, and the called terminal enters a non-time-slot monitoring mode after demodulating the BCAM without resources;

the base station side transmits the BCAM without resources in the queue to an air interface, and the called terminal monitoring the current paging time slot receives

the BCAM without resources, wherein the non-time-slot monitoring mode refers to a mode in which the called terminal continuously monitors the paging time slot of the paging channel after demodulating the BCAM without resources, that is, after demodulating the BCAM without resources, the called terminal enters a non-time-slot monitoring mode.

Step 107: the base station side constructs a BCAM with resources and transmits the BCAM with resources to the called terminal in the last paging time slot in each time slot period;

here, after receiving the BCAM without resources, the called terminal starts monitoring the paging channel in a continuous manner, that is, enters a non-time-slot monitoring mode, therefore, the BCAM with resources is transmitted to an air interface in the last paging time slot in a time slot period, and the called terminal in the non-time-slot monitoring mode can receive the BCAM with resources.

Step 108: the called terminal demodulates the BCAM with resources, and all the called terminals access the current conventional group call successfully;

in this step, the called terminal starts monitoring the paging channel in a non-time-slot monitoring manner after receiving the BCAM without resources. Moreover, in this embodiment, the conventional group call transmits the BCAM without resources and the BCAM with resources separately, thus, the called terminal in a non-time-slot monitoring mode can quickly access the current conventional group call by receiving a BCAM with channel resource instead of carrying out a signaling shake and a service negotiation with the base station side.

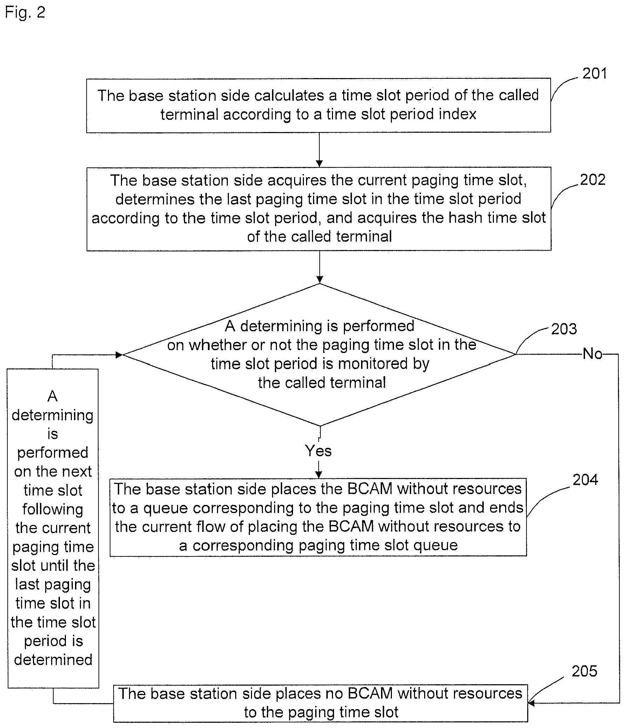

The above is the implementation process of the method for transmitting a BCAM in a trunking system according to the disclosure, and below is a further description given on the main implementation process of the placing the BCAM without resources to a corresponding paging time slot queue shown in step 105 with reference to Fig. 2, this process mainly comprises the following steps.

Step 201: the base station side calculates the time slot period of the called terminal according to a time slot period index configured by the base station side;

here, the time slot period of the called terminal is calculated according to the following formula (1):

$$\text{time slot period} = 16 \times 2^{-i} \qquad (1)$$

wherein i represents a time slot period index, which is a parameter configured at the base station side, and the base station side can obtain the parameter i by querying a database; for instance, if the time slot period index is 0 and the called terminal supports a positive time slot period index but not a negative time slot period index, then the time slot period is calculated according to the following formula: $16 \times 2^0 = 16$.

Step 202: the base station side acquires the current paging time slot, determines the last paging time slot in the time slot period according to the time slot period, and acquires the hash time slot of the called terminal;
for instance, as the current paging time slot is 24 and the time slot period is 16, the last paging time slot in a time slot period can be calculated according to the following formula: (current paging time slot + time slot period - 1)=(24+16-1)=39, wherein the last paging time slot in the time slot period is mainly determined to send the BCAM with resources in the last paging time slot; however, the continuous paging time slots in the time slot period are 24, 25, 26, 27, 28, 29, 30, 31, 32, 33, 34, 35, 36, 37, 38 and 39; the current paging time slot refers to the paging time slot of the current paging channel, that is, the paging time slot in which the current BCAM is transmitted; here, the hash time slot of the terminal is calculated according to the following formula (2):

$$\text{hash time slot of terminal=paging time slot MOD time slot period} \qquad (2)$$

for instance, if the current paging time slot is 24 and the time slot period is 16, then the hash time slot of the terminal is calculated as follows: 24 MOD 16=8.

Step 203: a determining is made on whether or not the paging time slot in the time slot period is monitored by the called terminal, if so, the flow proceeds to step 204, otherwise, the flow proceeds to step 205;
wherein determining whether or not the paging time slot in the time slot period is monitored by the called terminal is mainly determining whether or not the calculated hash time slot of the called terminal exists in the hash time slot list, if the hash time slot of the terminal exists in the hash time slot list, then it is indicated that the paging time slot corresponding to the hash time slot of the terminal is monitored by the called terminal, and if the hash time slot of the terminal is absent from the hash time slot list, then it is indicated that the paging time slot corresponding to the hash time slot of the terminal is not monitored by the called terminal;
for instance, if the current paging time slot is 24 and the time slot period is 16, then the hash time slot of the called terminal is calculated as follows: 24 MOD 16=8, and the time slots (namely the hash time slot list) obtained by hashing the IMSI include 0, 2, 4, 6, 8, 10, 12 and 14, as the hash time slot 8 of the terminal exists in the hash time slot list, therefore it can be known that the paging time slot 24 corresponding to the hash time slot 8 of the terminal is monitored by the called terminal.

Step 204: the base station side places the BCAM without resources to a queue corresponding to the paging time slot and ends the current flow of placing a BCAM without resources to a corresponding paging time slot queue;
it should be noted that: in order to take both a terminal supporting a positive time slot period index and a terminal supporting a negative time slot period index into consideration, in the case where both a positive time slot period index and a negative time slot period index are supported, a time slot period is calculated based on the negative time slot period index, and a BCAM without resources is placed to a queue corresponding to a paging time slot in a first time slot period starting from the current paging time slot according to a hash time slot list, so as to guarantee a called terminal supporting the negative time slot period index can continuously monitor a paging time slot and place a BCAM with resources in the last paging time slot in the first time slot period, thereby enabling the called terminal supporting the negative time slot period index to access the current system group call quickly;
meanwhile, in order to avoid the call for a called terminal supporting the positive time slot period index being missed, it is required to place a BCAM to a queue corresponding to a paging time slot in a second time slot period following the last paging time slot, wherein a BCAM without resources is correspondingly placed to a paging time slot according to a hash time slot list to guarantee that the called terminal supporting the positive time slot period index can monitor a paging channel continuously, and a BCAM with resources is placed to the last paging time slot in the second time slot period to guarantee that all the called terminals supporting the positive time slot period index can successfully access the current system group call, wherein the second time slot period refers to the time slot period following the last paging time slot in the first time slot period.

Step 205: the base station side places no BCAM without resources to the paging time slot and returns to step 203 to determine the next time slot following the current paging time slot until the last paging time slot in the time slot period is determined.

The description on the process of placing a BCAM without resources to a corresponding paging time slot queue is completed here, and the placing process is further described below in conjunction with specific embodiments.

Embodiment 1: if the time slot period index is 0 and the called terminal supports a positive time slot period index but not a negative time slot period index, then the time slot period is calculated according to the following formula: $16 \times 2^0 = 16$; assuming the paging time slot of the current paging channel is 24, the hash time slot list obtained by hashing an IMSI includes 0, 2, 4, 6, 8, 10, 12 and 14; then, the hash time slot of the terminal is 8 (24 MOD 16), which exists in the hash time slot list, therefore, it is required to place the BCAM without resources to the queue corresponding to the paging time slot 24 and wait for the transmitting of a constituted frame to an air interface; for a paging time slot 25, the hash time slot of the terminal is 9 (25 MOD16), which is absent from the hash time slot list, therefore, there is no need to place the BCAM without resources to the paging time slot 25; and the processes can be implemented for paging time slots 26 to 38 in the same way;

for the paging time slot 39, which is the last one in a time slot period, the called terminal enters a non-time-slot monitoring mode after receiving the BCAM without resources, therefore, the access of all the called terminals in the system group to the system group call can be realized successfully only by transmitting a BCAM with resources in the last paging time slot.

Embodiment 2: if the time slot period index is 1 and the called terminal supports both a positive time slot period index and a negative time slot period index, then the time slot period is calculated according to the negative time slot period index through the following formula: $16 \times 2^{-1} = 8$; if the current paging time slot is 27, and the hash time slot list includes 0, 2, 4 and 6, then the method for placing the BCAM to a queue corresponding to the paging time slot comprises the following steps:

placing the BCAM without resources to paging time slots 28, 30 and 32 after implementing a calculation according to the formula (2) in the first time slot period so as to guarantee a called terminal supporting a negative time slot period index can enter a

continuous paging time slot monitoring mode, placing the BCAM with resources to the paging time slot 34 so that a called terminal supporting a negative time slot period index can access the current system group call quickly;

meanwhile, in order to avoid the call for a called terminal supporting a positive time slot period index being missed, it is required to selectively place the BCAM to the paging time slots 35-42 in the second time slot period, wherein it can be known from the calculation carried out according to formula (2) that it is required to place the BCAM without resources to the paging time slots 36, 38 and 40 to guarantee that the called terminal supporting a positive time slot period index can enter a continuous paging channel monitoring mode, and the BCAM with resources is placed to the paging time slot 42 so that all the called terminals supporting a positive time slot period index can successfully access the current system group call; the position where the BCAM is placed is shown in the following Table 2:

Table 2

| Hash time slot | | 4 | | 6 | | 0 | | 2 | | 4 | | 6 | | 0 | | 2 |
|---|---|---|---|---|---|---|---|---|---|---|---|---|---|---|---|---|
| Paging time slot | 27 | 28 | 29 | 30 | 31 | 32 | 33 | 34 | 35 | 36 | 37 | 38 | 39 | 40 | 41 | 42 |
| Placing or not Placing? | N | Y | N | Y | N | Y | N | Y | N | Y | N | Y | N | Y | N | Y |

here, what is listed in the Table 2 above is the result from the placing of a BCAM to a queue corresponding to paging time slots for a called terminal supports both a positive time slot period index and a negative time slot period index.

It can be seen that during the establishment process of a call, the base station side transmits a BCAM without resources to the called terminal in the system group of the current call in a paging channel, and the called terminal enters a non-time-slot monitoring mode after demodulating the BCAM without resources. As a consequence, the base station side can enable the successful access of all the called terminals in the system group only by transmitting one BCAM with resources. Therefore, the present disclosure can effectively solve the problem of paging overload caused by the continuous BCAM transmitting and achieve an extremely high success rate of calls; besides, as being compatible with a terminal supporting a positive time slot period index and a terminal supporting a negative time slot period index, the present disclosure guarantees the quick access of a called terminal supporting a negative time slot period index while avoiding the call for a called terminal supporting a positive time slot period index being missed. The method for transmitting a BCAM in a trunking communication system is suitable for any communication device needing to send a BCAM.

For the sake of a simplified description, the foregoing embodiments are each expressed as a combination of a series of actions, however, it should be understood by those skilled in the art that the present disclosure is not limited by the described order of actions, and that in accordance with the present disclosure, some steps can be executed in another order or executed synchronously.

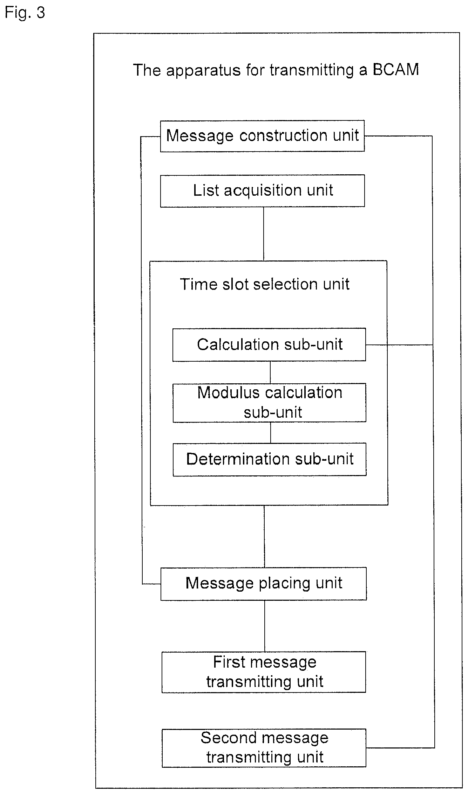

In order to achieve the aforementioned method, the present disclosure further provides an apparatus for transmitting a BCAM in a trunking system as shown in Fig. 3, which comprises: a message construction unit, a list acquisition unit, a time slot selection unit, a message placing unit, a first message transmitting unit and a second message transmitting unit, wherein
the message construction unit is configured to construct a BCAM without resources and a BCAM with resources;
the list acquisition unit is configured to acquire a hash time slot list according to an IMSI list;
the time slot selection unit is configured to determine a paging time slot monitored by a called terminal according to the hash time slot list and acquire the last paging time slot in a time slot period;
the message placing unit is configured to place the BCAM without resources to a queue corresponding to the paging time slot monitored by the called terminal;
the first message transmitting unit is configured to transmit the BCAM without resources in the queue to the called terminal, which enters a non-time-slot monitoring mode after demodulating the BCAM without resources; and
the second message transmitting unit is configured to transmit the BCAM with resources to the called terminal in the last paging time slot in the time slot period which is acquired by the time slot selection unit, to make the called terminal in the non-time-slot monitoring mode successfully access the current conventional group call after the called terminal in the non-time-slot monitoring mode demodulates the BCAM with resources.

In the aforementioned apparatus, the time slot selection unit comprises: a calculation sub-unit, a modulus calculation sub-unit and a determination sub-unit, wherein
the calculation sub-unit is configured to calculate a time slot period according to a time slot period index configured by a base station side, acquire the current paging time slot, and acquire the last paging time slot in the time slot period;
the modulus calculation sub-unit is configured to perform a modulus calculation on the current paging time slot and the time slot period to obtain the hash time slot of the terminal; and
the determination sub-unit is configured to determine whether or not the current paging time slot is monitored by the called terminal according to the hash time slot of the terminal, and determine, when there is a paging time slot monitored by the called terminal, the paging time slot monitored by the called terminal is the one monitored by the called terminal.

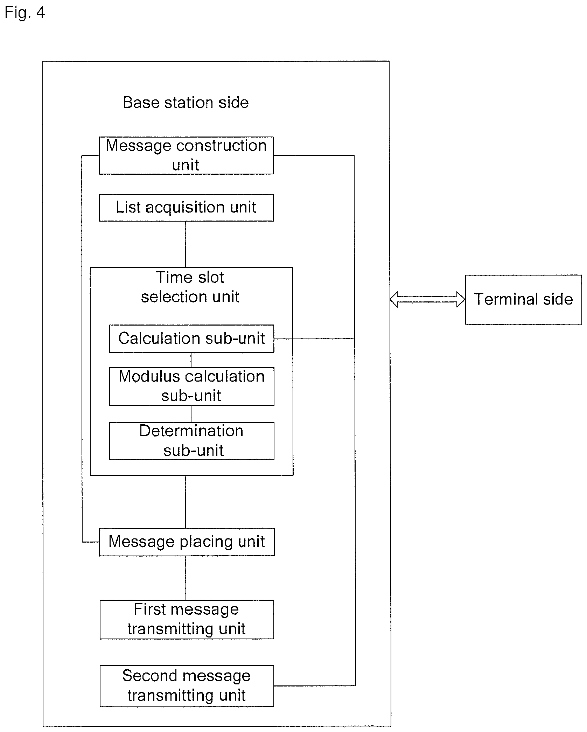

Accordingly, the present disclosure provides a system for transceiving a BCAM in a trunking system as shown in Fig. 4, which comprises a base station side and a terminal side, wherein
the base station side is configured to construct a BCAM without resources and a BCAM with resources, acquire a hash time slot list according to an IMSI list, place the BCAM without resources to a queue corresponding to the paging time slot monitored by the called terminal, and transmit the BCAM without resources in the queue to the called terminal which enters a non-time-slot monitoring mode after demodulating the BCAM without resources, and transmit the BCAM with resources to the called terminal in the last paging time slot in a time slot period, to make the called terminal in the non-time-slot monitoring mode successfully access the current conventional group call after the called terminal entering the non-time-slot monitoring mode demodulates the BCAM with resources; and
the terminal side is configured to receive the BCAM without resources from the base station side, and enter the non-time-slot monitoring mode after demodulating the BCAM without resources; and receive the BCAM with resources, and access the system group call after demodulating the BCAM with resources.

In the aforementioned system, the base station side comprises: a message construction unit located in a PBSSAP, a list acquisition unit located in a CSCHP, a time slot selection unit and a message placing unit which are located in a CES, and a first message transmitting unit and a second message transmitting unit, wherein
the message construction unit is configured to construct a BCAM without resources and a BCAM with resources;
the list acquisition unit is configured to acquire a hash time slot list according to an IMSI list;
the time slot selection unit is configured to determine a paging time slot monitored by a called terminal according to the hash time slot list and acquire the last paging time slot in a time slot period;
the message placing unit is configured to place the BCAM without resources to a queue corresponding to the paging time slot monitored by the called terminal;
the first message transmitting unit is configured to transmit the BCAM without resources in the queue to the called terminal, which enters a non-time-slot monitoring mode after demodulating the BCAM without resources; and
the second message transmitting unit is configured to transmit the BCAM with resources to the called terminal in the last paging time slot in a time slot period, to make called terminal in the non-time-slot monitoring mode successfully access the current conventional group call after the called terminal in the non-time-slot monitoring mode demodulates the BCAM with resources.

In the aforementioned system, the time slot selection unit comprises: a calculation sub-unit, a modulus calculation sub-unit and a determination sub-unit, wherein
the calculation sub-unit is configured to calculate a time slot period according to a time slot period index configured by the base station side, acquire the current paging time slot, and acquire the last paging time slot in the time slot period;
the modulus calculation sub-unit is configured to perform a modulus calculation on the current paging time slot and the time slot period to obtain the hash time slot of the terminal; and
the determination sub-unit is configured to determine whether or not the current paging time slot is monitored by the called terminal according to the hash time slot of the terminal, and determine, when there is a paging time slot monitored by the called terminal, the paging time slot is the one monitored by the called terminal.

The foregoing embodiments are respectively emphasized on a certain aspect, and the part that is not described in detail in an embodiment can be understood with reference to a corresponding description in another embodiment. The mentioned above is only preferred embodiments of the present disclosure, and is only used for illustrating and explaining the disclosure but not used for limiting the protection scope of the present disclosure.

**Claims**

1. A method for transmitting a Broadcast Channel Assignment Message, BCAM, in a trunking system **characterized by**, comprising:

   constructing, by a base station side, a BCAM without resources after channel resource of a conventional group call is successfully established (S103), generating a hash time slot list according to an acquired International Mobile Subscriber Identity, IMSI, list (104), determining a paging time slot monitored by a called terminal according to the hash time slot list, and placing the BCAM without resources to a queue corresponding to the paging time slot monitored by the called terminal (S105);
   transmitting, by the base station side, the BCAM without resources in the queue to the called terminal, which enters a non-time-slot monitoring mode after demodulating the BCAM without resources (S106); and
   constructing, by the base station side, a BCAM with resources, and transmitting the BCAM with resources to the called terminal in a last paging time slot in a time slot period (S107);

   wherein the placing the BCAM without resources to a queue corresponding to the paging time slot monitored by the called terminal comprises:

   when there are a called terminal supporting a positive time slot period index and a called terminal supporting a negative time slot period index in the conventional group, calculating the time slot period based on the negative time slot period index, placing the BCAM without resources to a paging time slot monitored by the called terminal supporting the negative time slot period index in a first time slot period according to the hash time slot list, and placing the BCAM without resources to a paging time slot monitored by the called terminal supporting the positive time slot period index in a second time slot period according to the hash time slot list;
   wherein the positive time slot period index is equal to the absolute value of the negative time slot period index, the first time slot period is a time slot period starting from a current paging time slot, and the second time slot period is a time slot period following a last paging time slot in the first time slot period.

2. The method according to claim 1, wherein the generating a hash time slot list according to an acquired IMSI list comprises:

   acquiring, by the base station side, the IMSI list of all members in a conventional group called by a calling terminal according to a group number of the conventional group; and
   hashing, by the base station side, the IMSI list in a time slot period to generate a hash time slot list.

3. The method according to claim 1, wherein the determining a paging time slot monitored by a called terminal according to the hash time slot list comprises:

   calculating a time slot period according to a time slot period index configured by the base station side and acquiring a current paging time slot;
   performing a modulus calculation on the current paging time slot and the time slot period to obtain a hash time slot of the terminal, and determining whether or not the current paging time slot is monitored by the called terminal according to the hash time slot of the terminal in the following manner: determining there is a called terminal monitoring the current paging time slot and the current paging time slot is the one monitored by the called terminal if the hash time slot of the terminal exists in the hash time slot list, and determining the current paging time slot is not monitored by a called terminal if the hash time slot of the terminal is absent from the hash time slot list.

4. The method according to claim 3, wherein the last paging time slot in the time slot period is calculated according to the following formula: the last paging time slot in a time slot period=the current paging time slot + the time slot period - 1.

5. An apparatus for transmitting a BCAM in a trunking system **characterized by**, comprising: a message construction unit, a list acquisition unit, a time slot selection unit, a message placing unit, a first message transmitting unit and a second message transmitting unit; wherein:

the message construction unit is configured to construct a BCAM without resources and a BCAM with resources;
the list acquisition unit is configured to generate a hash time slot list according to an acquired IMSI list;
the time slot selection unit is configured to determine a paging time slot monitored by a called terminal according to the hash time slot list and acquire a last paging time slot in a time slot period;
the message placing unit is configured to place the BCAM without resources to a queue corresponding to the paging time slot monitored by the called terminal;
the first message transmitting unit is configured to transmit the BCAM without resources in the queue to the called terminal, and
the second message transmitting unit is configured to transmit the BCAM with resources to the called terminal in the last paging time slot in the time slot period acquired by the time slot selection unit;
wherein the message placing unit is further configured to, when there are a called terminal supporting a positive time slot period index and a called terminal supporting a negative time slot period index in the conventional group, place the BCAM without resources to a paging time slot monitored by the called terminal supporting the negative time slot period index in a first time slot period according to the hash time slot list, and place the BCAM without resources to a paging time slot monitored by the called terminal supporting the positive time slot period index in a second time slot period according to the hash time slot list;
wherein the positive time slot period index is equal to absolute value of the negative time slot period index, the time slot period is calculated based on the negative time slot period index; and the first time slot period is a time slot period starting from a current paging time slot and the second time slot period is a time slot period following a last paging time slot in the first time slot period.

6.  The apparatus according to claim 5, wherein the time slot selection unit comprises a calculation sub-unit, a modulus calculation sub-unit and a determination sub-unit, wherein:

the calculation sub-unit is configured to calculate a time slot period according to a time slot period index configured by a base station side, acquire a current paging time slot, and acquire the last paging time slot in the time slot period,
the modulus calculation sub-unit is configured to perform a modulus calculation on the current paging time slot and the time slot period to obtain a hash time slot of the terminal, and
the determination sub-unit is configured to determine whether or not the current paging time slot is monitored by the called terminal according to the hash time slot of the terminal, and determine, when there is a paging time slot monitored by the called terminal, the paging time slot monitored by the called terminal is the paging time slot monitored by the called terminal.

7.  A system for transceiving a BCAM in a trunking system, **characterized by** comprising a base station side and a terminal side, wherein:

the base station side is configured to:

construct a BCAM without resources and a BCAM with resources, acquire a hash time slot list according to an IMSI list, and determine a paging time slot monitored by a called terminal according to the hash time slot list;
place the BCAM without resources to a queue corresponding to the paging time slot monitored by the called terminal;
transmit the BCAM without resources in the queue to the called terminal; and
transmit the BCAM with resources to the called terminal in a last paging time slot in a time slot period;
the terminal side is configured to:

receive the BCAM without resources from the base station side, and enter a non-time-slot monitoring mode after demodulating the BCAM without resources; and
receive the BCAM with resources, access a conventional group call after demodulating the BCAM with resources;
wherein the base station side is further configured to,_when there are a called terminal supporting a positive time slot period index and a called terminal supporting a negative time slot period index in the conventional group, calculate the time slot period based on the negative time slot period index, place

10

the BCAM without resources to a paging time slot monitored by the called terminal supporting the negative time slot period index in a first time slot period according to the hash time slot list, and place the BCAM without resources to a paging time slot monitored by the called terminal supporting the positive time slot period index in a second time slot period according to the hash time slot list;

wherein the positive time slot period index is equal to absolute value of the negative time slot period index, the first time slot period is a time slot period starting from a current paging time slot and the second time slot period is a time slot period following a last paging time slot in the first time slot period.

8. The system according to claim 7, wherein the base station side comprises a message construction unit, a list acquisition unit, a time slot selection unit, a message placing unit, a first message transmitting unit and a second message transmitting unit; wherein:

the message construction unit is configured to construct a BCAM without resources and a BCAM with resources;
the list acquisition unit is configured to generate a hash time slot list according to an acquired IMSI list;
the time slot selection unit is configured to determine a paging time slot monitored by a called terminal according to the hash time slot list and acquire the last paging time slot in a time slot period;
the message placing unit is configured to place the BCAM without resources to a queue corresponding to the paging time slot monitored by the called terminal;
the first message transmitting unit is configured to transmit the BCAM without resources in the queue to the called terminal, which enters a non-time-slot monitoring mode after demodulating the BCAM without resources; and
the second message transmitting unit is configured to transmit the BCAM with resources to the called terminal in the last paging time slot in the time slot period acquired by the time slot selection unit.

9. The system according to claim 8, wherein the time slot selection unit comprises a calculation sub-unit, a modulus calculation sub-unit and a determination sub-unit; wherein:

the calculation sub-unit is configured to calculate a time slot period according to a time slot period index configured by the base station side, acquire a current paging time slot, and acquire the last paging time slot in the time slot period,
the modulus calculation sub-unit is configured to perform a modulus calculation on the current paging time slot and the time slot period to obtain the hash time slot of the terminal, and
the determination sub-unit is configured to determine whether or not the current paging time slot is monitored by the called terminal according to the hash time slot of the terminal, and determine, when there is a paging time slot monitored by the called terminal, the paging time slot is the one monitored by the called terminal.

**Patentansprüche**

1. Verfahren zum Übertragen einer Broadcast-Kanalzuweisungsnachricht (Broadcast Channel Assignment Message), BCAM, in einem Leitungsführungssystem, **dadurch gekennzeichnet, dass** es umfasst:

Aufbauen einer BCAM ohne Ressourcen auf einer Basisstationsseite, nachdem eine Kanalressource eines herkömmlichen Gruppenrufs erfolgreich eingerichtet wurde (S103), Erzeugen einer Hash-Zeitschlitz-Tabelle gemäß einer beschafften internationalen Mobilfunkteilnehmerkennungs-Tabelle, IMSI-Tabelle, (104), Bestimmen eines Funkruf-Zeitschlitzes, der von einem angerufenen Endgerät überwacht wird, gemäß der Hash-Zeitschlitz-Tabelle und Setzen der BCAM ohne Ressourcen auf eine Warteschlange, die dem von dem angerufenen Endgerät überwachten Funkruf-Zeitschlitz entspricht (S105);
Übertragen der in der Warteschlange befindlichen BCAM ohne Ressourcen von Basisstationsseite an das angerufene Endgerät, welches in einen Nicht-Zeitschlitz-Überwachungs-Modus gelangt nach dem Demodulieren der BCAM ohne Ressourcen (S106); und
Aufbauen einer BCAM mit Ressourcen auf der Basisstationsseite und Übertragen der BCAM mit Ressourcen an das angerufene Endgerät in einem letzten Funkruf-Zeitschlitz in einer Zeitschlitzperiode (S107);
wobei Setzen der BCAM ohne Ressourcen auf eine Warteschlange, die dem von dem angerufenen Endgerät überwachten Funkruf-Zeitschlitz entspricht, umfasst:

wenn es ein angerufenes Endgerät, das einen positiven Zeitschlitzperioden-Index unterstützt, und ein angerufenes Endgerät, das einen negativen Zeitschlitzperioden-Index unterstützt, in der herkömmlichen Gruppe gibt, Berechnen der Zeitschlitzperiode auf Basis des negativen Zeitschlitzperioden-Index, Setzen der BCAM ohne Ressourcen auf einen Funkruf-Zeitschlitz, der von dem angerufenen Endgerät überwacht wird, das den negativen Zeitschlitzperioden-Index unterstützt in einer ersten Zeitschlitzperiode gemäß der Hash-Zeitschlitz-Tabelle, und Setzen der BCAM ohne Ressourcen auf einen Funkruf-Zeitschlitz, der von dem angerufenen Endgerät überwacht wird, das den positiven Zeitschlitzperioden-Index unterstützt in einer zweiten Zeitschlitzperiode gemäß der Hash-Zeitschlitz-Tabelle;

wobei der positive Zeitschlitzperioden-Index gleich dem absoluten Wert des negativen Zeitschlitzperioden-Index ist, die erste Zeitschlitzperiode eine Zeitschlitzperiode ist, die von einem aktuellen Funkruf-Zeitschlitz beginnt, und die zweite Zeitschlitzperiode eine Zeitschlitzperiode ist, die einem letzten Funkruf-Zeitschlitz in der ersten Zeitschlitzperiode folgt.

2. Verfahren gemäß Anspruch 1, wobei das Erzeugen einer Hash-Zeitschlitz-Tabelle gemäß einer beschafften IMSI-Tabelle umfasst:

Beschaffen der IMSI-Tabelle aller Mitglieder in einer herkömmlichen Gruppe, die von einem anrufenden Endgerät angerufen wird, auf Basisstationsseite gemäß einer Gruppennummer der herkömmlichen Gruppe; und Hashen der IMSI-Tabelle auf Basisstationsseite in einer Zeitschlitzperiode zum Erzeugen einer Hash-Zeitschlitz-Tabelle.

3. Verfahren gemäß Anspruch 1, wobei das Bestimmen eines von dem angerufenen Endgerät überwachten Funkruf-Zeitschlitzes gemäß der Hash-Zeitschlitz-Tabelle umfasst:

Berechnen einer Zeitschlitzperiode gemäß einem auf Basisstationsseite konfigurierten Zeitschlitzperioden-Index und Beschaffen eines aktuellen Funkruf-Zeitschlitzes; Durchführen einer Modul-Berechnung an dem aktuellen Funkruf-Zeitschlitz und der Zeitschlitzperiode zum Erhalten eines Hash-Zeitschlitzes des Endgeräts, und Bestimmen, ob der aktuelle Funkruf-Zeitschlitz von dem angerufenen Endgerät überwacht wird oder nicht, gemäß dem Hash-Zeitschlitz des Endgeräts in der folgenden Weise: Bestimmen, dass es ein angerufenes Endgerät gibt, das den aktuellen Funkruf-Zeitschlitz überwacht, und der aktuelle Funkruf-Zeitschlitz derjenige ist, der von dem angerufenen Endgerät überwacht wird, falls der Hash-Zeitschlitz des Endgeräts in der Hash-Zeitschlitz-Tabelle existiert, und Bestimmen, dass der aktuelle Zeitschlitz nicht von einem angerufenen Endgerät überwacht wird, falls der Hash-Zeitschlitz des Endgeräts in der Hash-Zeitschlitz-Tabelle nicht vorhanden ist.

4. Verfahren gemäß Anspruch 3, wobei der letzte Funkruf-Zeitschlitz in der Zeitschlitzperiode gemäß der folgenden Formel berechnet wird: der letzte Funkruf-Zeitschlitz in einer Zeitschlitzperiode = der aktuelle Funkruf-Zeitschlitz + die Zeitschlitzperiode - 1.

5. Vorrichtung zum Übertragen einer BCAM in einem Leitungsführungssystem, **dadurch gekennzeichnet, dass** sie umfasst: eine Nachrichtenaufbau-Einheit, eine Tabellen-Beschaffungseinheit, eine Zeitschlitz-Auswahleinheit, eine Nachrichtenablage-Einheit, eine erste Nachrichtenübertragungseinheit und eine zweite Nachrichtenübertragungseinheit; wobei:

die Nachrichtenaufbau-Einheit dazu konfiguriert ist, eine BCAM ohne Ressourcen und eine BCAM mit Ressourcen aufzubauen; die Tabellen-Beschaffungseinheit dazu konfiguriert ist, eine Hash-Zeitschlitz-Tabelle gemäß einer beschafften IMSI-Tabelle zu erzeugen; die Zeitschlitz-Auswahleinheit dazu konfiguriert ist, einen Funkruf-Zeitschlitz, der von dem angerufenen Endgerät überwacht wird, gemäß der Hash-Zeitschlitz-Tabelle zu bestimmen und einen letzten Funkruf-Zeitschlitz in einer Zeitschlitzperiode zu beschaffen; die Nachrichtenablage-Einheit dazu konfiguriert ist, die BCAM ohne Ressourcen auf eine Warteschlange zu setzen, die dem von dem angerufenen Endgerät überwachten Funkruf-Zeitschlitz entspricht; die erste Nachrichtenübertragungseinheit dazu konfiguriert ist, die in der Warteschlange befindliche BCAM ohne Ressourcen an das angerufene Endgerät zu übertragen; und die zweite Nachrichtenübertragungseinheit dazu konfiguriert ist, die BCAM mit Ressourcen in dem letzten Funkruf-Zeitschlitz in der von der Zeitschlitz-Auswahleinheit beschafften Zeitschlitzperiode an das angerufene Endgerät zu übertragen; wobei die Nachrichtenablage-Einheit ferner dazu konfiguriert ist, wenn es ein angerufenes Endgerät, das einen positiven Zeitschlitzperioden-Index unterstützt, und ein angerufenes Endgerät, das einen negativen Zeitschlitzperioden-Index unterstützt, in der herkömmlichen Gruppe gibt, die BCAM ohne Ressourcen in einer ersten Zeitschlitzperiode gemäß der Hash-Zeitschlitz-Tabelle auf einen Funkruf-Zeitschlitz abzulegen, der von dem angerufenen Endgerät überwacht wird, das den negativen Zeitschlitzperioden-Index unterstützt, und die BCAM ohne Ressourcen in einer zweiten Zeitschlitzperiode gemäß der Hash-Zeitschlitz-Tabelle auf einen Funkruf-Zeitschlitz abzulegen, der von dem angerufenen Endgerät überwacht wird, das den positiven Zeitschlitzperioden-Index unterstützt;

wobei der positive Zeitschlitzperioden-Index gleich dem absoluten Wert des negativen Zeitschlitzperioden-Index ist, die Zeitschlitzperiode auf Basis des negativen Zeitschlitzperioden-Index berechnet wird; und die erste Zeitschlitzperiode eine Zeitschlitzperiode ist, die von einem aktuellen Funkruf-Zeitschlitz beginnt, und die zweite Zeitschlitzperiode eine Zeitschlitzperiode ist, die einem letzten Funkruf-Zeitschlitz in der ersten Zeitschlitzperiode folgt.

6. Vorrichtung gemäß Anspruch 5, wobei die Zeitschlitz-Auswahleinheit eine Berechnungs-Untereinheit, eine Modulberechnungs-Untereinheit und eine Bestimmungs-Untereinheit umfasst, wobei:

die Berechnungs-Untereinheit dazu konfiguriert ist, eine Zeitschlitzperiode gemäß dem auf Basisstationsseite konfigurierten Zeitschlitzperioden-Index zu berechnen, einen aktuellen Funkruf-Zeitschlitz zu beschaffen und den letzten Funkruf-Zeitschlitz in der Zeitschlitzperiode zu beschaffen,
die Modulberechnungs-Untereinheit dazu konfiguriert ist, an dem aktuellen Funkruf-Zeitschlitz und der Zeitschlitzperiode eine Modulberechnung durchzuführen, um einen Hash-Zeitschlitz des Endgeräts zu erhalten, und
die Bestimmungs-Untereinheit dazu konfiguriert ist, gemäß dem Hash-Zeitschlitz des Endgeräts zu bestimmen, ob der aktuelle Funkruf-Zeitschlitz von dem angerufenen Endgerät überwacht wird oder nicht, und wenn es einen Funkruf-Zeitschlitz gibt, der von dem angerufenen Endgerät überwacht wird, zu bestimmen, dass der von dem angerufenen Endgerät überwachte Funkruf-Zeitschlitz der Funkruf-Zeitschlitz ist, der von dem angerufenen Endgerät überwacht wird.

7. System zum Senden und Empfangen einer BCAM in einem Leitungsführungssystem, **dadurch gekennzeichnet, dass** es eine Basisstationsseite und eine Endgeräteseite umfasst, wobei:

die Basisstationsseite dazu konfiguriert ist:

eine BCAM ohne Ressourcen und eine BCAM mit Ressourcen aufzubauen, eine Hash-Zeitschlitz-Tabelle gemäß einer IMSI-Tabelle zu beschaffen und einen Funkruf-Zeitschlitz, der von einem angerufenen Endgerät überwacht wird, gemäß der Hash-Zeitschlitz-Tabelle zu bestimmen;
die BCAM ohne Ressourcen auf eine Warteschlange zu setzen, die dem von dem angerufenen Endgerät überwachten Funkruf-Zeitschlitz entspricht;
die in der Warteschlange befindliche BCAM ohne Ressourcen an das angerufene Endgerät zu übertragen; und
die BCAM mit Ressourcen in einem letzten Funkruf-Zeitschlitz in einer Zeitschlitzperiode an das angerufene Endgerät zu übertragen;
die Endgeräteseite dazu konfiguriert ist:

die BCAM ohne Ressourcen von der Basisstationsseite zu empfangen und nach Demodulieren der BCAM ohne Ressourcen in einen Nicht-Zeitschlitz-Überwachungs-Modus zu gelangen; und
die BCAM mit Ressourcen zu empfangen, nach Demodulieren der BCAM mit Ressourcen auf einen herkömmlichen Gruppenruf zuzugreifen;
wobei die Basisstationsseite ferner dazu konfiguriert ist, wenn es ein angerufenes Endgerät, das einen positiven Zeitschlitzperioden-Index unterstützt, und ein angerufenes Endgerät, das einen negativen Zeitschlitzperioden-Index unterstützt, in der herkömmlichen Gruppe gibt, die Zeitschlitzperiode auf Basis des negativen Zeitschlitzperioden-Index zu berechnen, die BCAM ohne Ressourcen in einer ersten Zeitschlitzperiode gemäß der Hash-Zeitschlitz-Tabelle auf einen Funkruf-Zeitschlitz zu setzen, der von dem angerufenen Endgerät überwacht wird, das den negativen Zeitschlitzperioden-Index unterstützt, und die BCAM ohne Ressourcen in einer zweiten Zeitschlitzperiode gemäß der Hash-Zeitschlitz-Tabelle auf einen Funkruf-Zeitschlitz zu setzen, der von dem angerufenen Endgerät überwacht wird, das den positiven Zeitschlitzperioden-Index unterstützt;
wobei der positive Zeitschlitzperioden-Index gleich dem absoluten Wert des negativen Zeitschlitzperioden-Index ist, die erste Zeitschlitzperiode eine Zeitschlitzperiode ist, die ab einem aktuellen Funkruf-Zeitschlitz beginnt, und die zweite Zeitschlitzperiode eine Zeitschlitzperiode ist, die einem letzten Funkruf-Zeitschlitz in der ersten Zeitschlitzperiode folgt.

8. System gemäß Anspruch 7, wobei die Basisstationsseite eine Nachrichtenaufbau-Einheit, eine Tabellen-Beschaffungseinheit, eine Zeitschlitz-Auswahleinheit, eine Nachrichtenablage-Einheit, eine erste Nachrichtenübertragungseinheit und eine zweite Nachrichtenübertragungseinheit umfasst; wobei:

die Nachrichtenaufbau-Einheit dazu konfiguriert ist, eine BCAM ohne Ressourcen und eine BCAM mit Ressourcen aufzubauen;
die Tabellen-Beschaffungseinheit dazu konfiguriert ist, eine Hash-Zeitschlitz-Tabelle gemäß einer beschafften IMSI-Tabelle zu erzeugen;
die Zeitschlitz-Auswahleinheit dazu konfiguriert ist, einen Funkruf-Zeitschlitz, der von dem angerufenen Endgerät überwacht wird, gemäß der Hash-Zeitschlitz-Tabelle zu bestimmen und den letzten Funkruf-Zeitschlitz in einer Zeitschlitzperiode zu beschaffen;
die Nachrichtenablage-Einheit dazu konfiguriert ist, die BCAM ohne Ressourcen auf eine Warteschlange zu setzen, die dem von dem angerufenen Endgerät überwachten Funkruf-Zeitschlitz entspricht;
die erste Nachrichtenübertragungseinheit dazu konfiguriert ist, die in der Warteschlange befindliche BCAM ohne Ressourcen an das angerufene Endgerät zu übertragen, das nach dem Demodulieren der BCAM ohne Ressourcen in einen Nicht-Zeitschlitz-Überwachungs-Modus gelangt; und
die zweite Nachrichtenübertragungseinheit dazu konfiguriert ist, die BCAM mit Ressourcen in dem letzten Funkruf-Zeitschlitz in der von der Zeitschlitz-Auswahleinheit beschafften Zeitschlitzperiode an das angerufene Endgerät zu übertragen.

9. System gemäß Anspruch 8, wobei die Zeitschlitz-Auswahleinheit eine Berechnungs-Untereinheit, eine Modulberechnungs-Untereinheit und eine Bestimmungs-Untereinheit umfasst, wobei:

die Berechnungs-Untereinheit dazu konfiguriert ist, eine Zeitschlitzperiode gemäß einem auf der Basisstationsseite konfigurierten Zeitschlitzperioden-Index zu berechnen, einen aktuellen Funkruf-Zeitschlitz zu beschaffen und den letzten Funkruf-Zeitschlitz in der Zeitschlitzperiode zu beschaffen,
die Modulberechnungs-Untereinheit dazu konfiguriert ist, an dem aktuellen Funkruf-Zeitschlitz und der Zeitschlitzperiode eine Modulberechnung durchzuführen, um einen Hash-Zeitschlitz des Endgeräts zu beschaffen, und
die Bestimmungs-Untereinheit dazu konfiguriert ist, gemäß dem Hash-Zeitschlitz des Endgeräts zu bestimmen, ob der aktuelle Funkruf-Zeitschlitz von dem angerufenen Endgerät überwacht wird oder nicht, und wenn es einen Funkruf-Zeitschlitz gibt, der von dem angerufenen Endgerät überwacht wird, zu bestimmen, dass der Funkruf-Zeitschlitz derjenige ist, der von dem angerufenen Endgerät überwacht wird.

**Revendications**

1. Procédé pour transmettre un Message d'assignation de canal de diffusion, BCAM, dans un système de jonction, **caractérisé en ce qu'**il comprend :

la construction, par un côté station de base, d'un BCAM sans ressources après qu'une ressource de canal d'un appel de groupe conventionnel est établie avec succès (S103), la génération d'une liste de créneaux temporels de hachage selon une liste d'Identité internationale d'abonné mobile, IMSI, (104) acquise, la détermination d'un créneau temporel de radiomessagerie surveillé par un terminal appelé selon la liste de créneaux temporels de hachage, et le placement du BCAM sans ressources vers une file d'attente correspondant au créneau temporel de radiomessagerie surveillé par le terminal appelé (S105) ;
la transmission, par le côté station de base, du BCAM sans ressources dans la file d'attente au terminal appelé, qui entre dans un mode de non-surveillance de créneau temporel après la démodulation du BCAM sans ressources (S106) ; et
la construction, par le côté station de base, d'un BCAM avec ressources, et la transmission du BCAM avec ressources au terminal appelé dans un dernier créneau temporel de radiomessagerie dans une période de créneau temporel (S107) ;
dans lequel le placement du BCAM sans ressources vers une file d'attente correspondant au créneau temporel de radiomessagerie surveillé par le terminal appelé comprend :

lorsqu'il y a un terminal appelé supportant un indice de période de créneau temporel positif et un terminal appelé supportant un indice de période de créneau temporel négatif dans le groupe conventionnel, le calcul de la période de créneau temporel sur la base de l'indice de période de créneau temporel négatif, le placement du BCAM sans ressources vers un créneau temporel de radiomessagerie surveillé par le terminal appelé supportant l'indice de période de créneau temporel négatif dans une première période de créneau temporel selon la liste de créneaux temporels de hachage, et le placement du BCAM sans ressources vers un créneau temporel de radiomessagerie surveillé par le terminal appelé supportant l'indice de période de créneau temporel positif dans une seconde période de créneau temporel selon la liste de créneaux temporels de hachage ;

dans lequel l'indice de période de créneau temporel positif est égal à la valeur absolue de l'indice de période de créneau temporel négatif, la première période de créneau temporel est une période de créneau temporel commençant à partir d'un créneau temporel de radiomessagerie actuel, et la seconde période de créneau temporel est une période de créneau temporel suivant un dernier créneau temporel de radiomessagerie dans la première période de créneau temporel.

2. Procédé selon la revendication 1, dans lequel la génération d'une liste de créneaux temporels de hachage selon une liste IMSI acquise comprend :

l'acquisition, par le côté station de base, de la liste IMSI de tous les membres dans un groupe conventionnel appelé par un terminal appelant selon un numéro de groupe du groupe conventionnel ; et

le hachage, par le côté station de base, de la liste IMSI dans une période de créneau temporel pour générer une liste de créneaux temporels de hachage.

3. Procédé selon la revendication 1, dans lequel la détermination d'un créneau temporel de radiomessagerie surveillé par un terminal appelé selon la liste de créneaux temporels de hachage comprend :

le calcul d'une période de créneau temporel selon un indice de période de créneau temporel configuré par le côté station de base et l'acquisition d'un créneau temporel de radiomessagerie actuel ;

l'exécution d'un calcul de module sur le créneau temporel de radiomessagerie actuel et la période de créneau temporel pour obtenir un créneau temporel de hachage du terminal, et la détermination de si oui ou non le créneau temporel de radiomessagerie actuel est surveillé par le terminal appelé selon le créneau temporel de hachage du terminal de la manière suivante : déterminer qu'il y a un terminal appelé surveillant le créneau temporel de radiomessagerie actuel et le créneau temporel de radiomessagerie actuel est celui surveillé par le terminal appelé si le créneau temporel de hachage du terminal existe dans la liste de créneaux temporels de hachage, et déterminer que le créneau temporel de radiomessagerie actuel n'est pas surveillé par un terminal appelé si le créneau temporel de hachage du terminal est absent de la liste de créneaux temporels de hachage.

4. Procédé selon la revendication 3, dans lequel le dernier créneau temporel de radiomessagerie dans la période de créneau temporel est calculé selon la formule suivante : le dernier créneau temporel de radiomessagerie dans une période de créneau temporel = le créneau de temps de radiomessagerie actuel + la période de créneau temporel - 1.

5. Appareil pour transmettre un BCAM dans un système de jonction, **caractérisé en ce qu'**il comprend : une unité de construction de message, une unité d'acquisition de liste, une unité de sélection de créneau temporel, une unité de placement de message, une première unité de transmission de message et une seconde unité de transmission de message ; dans lequel :

l'unité de construction de message est configurée pour construire un BCAM sans ressources et un BCAM avec ressources ;

l'unité d'acquisition de liste est configurée pour générer une liste de créneaux temporels de hachage selon une liste IMSI acquise ;

l'unité de sélection de créneau temporel est configurée pour déterminer un créneau temporel de radiomessagerie surveillé par un terminal appelé selon la liste de créneaux temporels de hachage et acquérir un dernier créneau temporel de radiomessagerie dans une période de créneau temporel ;

l'unité de placement de message est configurée pour placer le BCAM sans ressources vers une file d'attente correspondant au créneau temporel de radiomessagerie surveillé par le terminal appelé ;

la première unité de transmission de message est configurée pour transmettre le BCAM sans ressources dans la file d'attente au terminal appelé, et

la seconde unité de transmission de message est configurée pour transmettre le BCAM avec ressources au terminal appelé dans le dernier créneau temporel de radiomessagerie dans la période de créneau temporel acquise par l'unité de sélection de créneau temporel ;

dans lequel l'unité de placement de message est en outre configurée pour, lorsqu'il y a un terminal appelé supportant un indice de période de créneau temporel positif et un terminal appelé supportant un indice de période de créneau temporel négatif dans le groupe conventionnel, placer le BCAM sans ressources vers un créneau temporel de radiomessagerie surveillé par le terminal appelé supportant l'indice de période de créneau temporel négatif dans une première période de créneau temporel selon la liste de créneaux temporels de hachage, et placer le BCAM sans ressources vers un créneau temporel de radiomessagerie surveillé par le terminal appelé supportant l'indice de période de créneau temporel positif dans une seconde période de créneau temporel selon la liste de créneaux temporels de hachage ;

dans lequel l'indice de période de créneau temporel positif est égal à la valeur absolue de l'indice de période de créneau temporel négatif, la période de créneau temporel est calculée sur la base de l'indice de période de créneau temporel négatif ; et la première période de créneau temporel est une période de créneau temporel commençant à partir d'un créneau temporel de radiomessagerie actuel et la seconde période de créneau temporel est une période de créneau temporel suivant un dernier créneau temporel de radiomessagerie dans la première période de créneau temporel.

6. Appareil selon la revendication 5, dans lequel l'unité de sélection de créneau temporel comprend une sous-unité de calcul, une sous-unité de calcul de module et une sous-unité de détermination, dans lequel :

la sous-unité de calcul est configurée pour calculer une période de créneau temporel selon un indice de période de créneau temporel configuré par un côté station de base, acquérir un créneau temporel de radiomessagerie actuel, et acquérir le dernier créneau temporel de radiomessagerie dans la période de créneau temporel,

la sous-unité de calcul de module est configurée pour effectuer un calcul de module sur le créneau temporel de radiomessagerie actuel et la période de créneau temporel pour obtenir un créneau temporel de hachage du terminal, et

la sous-unité de détermination est configurée pour déterminer si oui ou non le créneau temporel de radiomessagerie actuel est surveillé par le terminal appelé selon le créneau temporel de hachage du terminal, et déterminer, lorsqu'il y a un créneau temporel de radiomessagerie surveillé par le terminal appelé, que le créneau temporel de radiomessagerie surveillé par le terminal appelé est le créneau temporel de radiomessagerie surveillé par le terminal appelé.

7. Système pour transmettre-recevoir un BCAM dans un système de jonction, **caractérisé en ce qu'**il comprend un côté station de base et un côté terminal, dans lequel :

le côté station de base est configuré pour :

construire un BCAM sans ressources et un BCAM avec ressources, acquérir une liste de créneaux temporels de hachage selon une liste IMSI, et déterminer un créneau temporel de radiomessagerie surveillé par un terminal appelé selon la liste de créneaux temporels de hachage ;

placer le BCAM sans ressources vers une file d'attente correspondant au créneau temporel de radiomessagerie surveillé par le terminal appelé ;

transmettre le BCAM sans ressources dans la file d'attente au terminal appelé ; et

transmettre le BCAM avec ressources au terminal appelé dans un dernier créneau temporel de radiomessagerie dans une période de créneau temporel ;

le côté terminal est configuré pour :

recevoir le BCAM sans ressources en provenance du côté station de base, et entrer dans un mode de non-surveillance de créneau temporel après la démodulation du BCAM sans ressources ; et

recevoir le BCAM avec ressources, accéder à un appel de groupe conventionnel après la démodulation du BCAM avec ressources ;

dans lequel le côté station de base est en outre configuré pour, lorsqu'il y a un terminal appelé supportant un indice de période de créneau temporel positif et un terminal appelé supportant un indice de période de créneau temporel négatif dans le groupe conventionnel, calculer la période de créneau temporel sur la base de l'indice de période de créneau temporel négatif, placer le BCAM sans ressources vers un créneau temporel de radiomessagerie surveillé par le terminal appelé supportant l'indice de période de créneau temporel négatif dans une première période de créneau temporel selon la liste de créneaux temporels de hachage, et placer le BCAM sans ressources vers un créneau temporel de radiomessagerie surveillé par le terminal appelé supportant l'indice de période de créneau temporel positif dans une seconde période de créneau temporel selon la liste de créneaux temporels de hachage ;
dans lequel l'indice de période de créneau temporel positif est égal à la valeur absolue de l'indice de période de créneau temporel négatif, la première période de créneau temporel est une période de créneau temporel commençant à partir d'un créneau temporel de radiomessagerie actuel et la seconde période de créneau temporel est une période de créneau temporel suivant un dernier créneau temporel de radiomessagerie dans la première période de créneau temporel.

8. Système selon la revendication 7, dans lequel le côté station de base comprend une unité de construction de message, une unité d'acquisition de liste, une unité de sélection de créneau temporel, une unité de placement de message, une première unité de transmission de message et une seconde unité de transmission de message ; dans lequel :

l'unité de construction de message est configurée pour construire un BCAM sans ressources et un BCAM avec ressources ;
l'unité d'acquisition de liste est configurée pour générer une liste de créneaux temporels de hachage selon une liste IMSI acquise ;
l'unité de sélection de créneau temporel est configurée pour déterminer un créneau temporel de radiomessagerie surveillé par un terminal appelé selon la liste de créneaux temporels de hachage et acquérir le dernier créneau temporel de radiomessagerie dans une période de créneau temporel ;
l'unité de placement de message est configurée pour placer le BCAM sans ressources vers une file d'attente correspondant au créneau temporel de radiomessagerie surveillé par le terminal appelé ;
la première unité de transmission de message est configurée pour transmettre le BCAM sans ressources dans la file d'attente au terminal appelé, qui entre dans un mode de non-surveillance de créneau temporel après la démodulation du BCAM sans ressources ; et
la seconde unité de transmission de message est configurée pour transmettre le BCAM avec ressources au terminal appelé dans le dernier créneau temporel de radiomessagerie dans la période de créneau temporel acquise par l'unité de sélection de créneau temporel.

9. Système selon la revendication 8, dans lequel l'unité de sélection de créneau temporel comprend une sous-unité de calcul, une sous-unité de calcul de module et une sous-unité de détermination ; dans lequel :

la sous-unité de calcul est configurée pour calculer une période de créneau temporel selon un indice de période de créneau temporel configuré par le côté station de base, acquérir un créneau temporel de radiomessagerie actuel, et acquérir le dernier créneau temporel de radiomessagerie dans la période de créneau temporel,
la sous-unité de calcul de module est configurée pour effectuer un calcul de module sur le créneau temporel de radiomessagerie actuel et la période de créneau temporel pour obtenir le créneau temporel de hachage du terminal, et
la sous-unité de détermination est configurée pour déterminer si oui ou non le créneau temporel de radiomessagerie actuel est surveillé par le terminal appelé selon le créneau temporel de hachage du terminal et déterminer, lorsqu'il y a un créneau temporel de radiomessagerie surveillé par le terminal appelé, que le créneau temporel de radiomessagerie est celui surveillé par le terminal appelé.

Fig. 1

A calling terminal initiates a conventional group call — 101

After the calling terminal initiates the group call, a base station side establishes the channel resource needed by the conventional group call — 102

The base station side acquires the IMSI list of all the numbers in a conventional group called by the calling terminal according to the group number of the conventional group and constructs a BCAM without resources — 103

The base station side hashes the IMSI list in the time slot period to acquire a hash time slot list — 104

The base station side determines a paging time slot monitored by the called terminal according to the hash time slot list and places the BCAM without resources to a queue corresponding to the paging time slot monitored by the called terminal — 105

The base station side combines the BCAM without resources into a frame and transmits the resulting frame to the called terminal, and the called terminal enters a non-time-slot monitoring mode after demodulating the BCAM without resources — 106

The base station side constructs a BCAM with resources and transmits the BCAM with resources to the called terminal in the last paging time slot in each time slot period — 107

The called terminal demodulates the BCAM with resources, and all the called terminals access the current conventional group call successfully — 108

Fig. 2

The base station side calculates a time slot period of the called
terminal according to a time slot period index — 201

The base station side acquires the current paging time slot,
determines the last paging time slot in the time slot period
according to the time slot period, and acquires the hash time slot
of the called terminal — 202

A determining is performed
on whether or not the paging time slot in the
time slot period is monitored by
the called terminal — 203 — No

Yes

A determining is performed on the next time slot following the current paging time slot until the last paging time slot in the time slot period is determined

The base station side places the BCAM without resources
to a queue corresponding to the paging time slot and ends
the current flow of placing the BCAM without resources to
a corresponding paging time slot queue — 204

The base station side places no BCAM without resources
to the paging time slot — 205

Fig. 3

The apparatus for transmitting a BCAM

Message construction unit

List acquisition unit

Time slot selection unit

Calculation sub-unit

Modulus calculation
sub-unit

Determination sub-unit

Message placing unit

First message
transmitting unit

Second message
transmitting unit

Fig. 4

## REFERENCES CITED IN THE DESCRIPTION

**Patent documents cited in the description**

- CN 200810065901

- WO 2004006615 A